# EUROPEAN PATENT SPECIFICATION

(11) **EP 0 636 192 B1**
(45) Date of publication and mention of the grant of the patent: **24.06.1998**
(21) Application number: 93908047.9
(22) Date of filing: 14.04.1993
(51) Int. Cl.: D21C 5/02

(54) **DEINKING OF CELLULOSIC MATERIAL AND COMPOSITIONS FOR USE IN THIS**
DEINKEN VON CELLULOSEMATERIAL UND DAZU VERWENDBARE ZUSAMMENSETZUNGEN
DESENCRAGE DE MATERIAU CELLULOSIQUE ET COMPOSITIONS UTILISEES

(30) Priority: 15.04.1992 GB 9208293
(43) Date of publication of application: 01.02.1995
(73) Proprietor: ALLIED COLLOIDS LIMITED, Bradford, West Yorkshire BD12 0JZ (GB)
(72) Inventor: LANGLEY, John Graham, Leeds, West Yorkshire LS20 8NS (GB)
(74) Representative: Lawrence, Peter Robin Broughton
(86) International application number: GB9300780
(87) International publication number: WO9321376

(56) References cited:
- FR-A- 2 276 857
- GB-A- 2 178 079
- US-A- 4 162 186

## Description

This invention relates to the de-inking of waste paper. In this specification we use the term "paper" to be generic to cellulosic sheet materials including filled and unfilled papers and paper board.

It is standard practice to reclaim waste paper to allow the reclaimed paper fibres to be used as part or all of the stock of subsequent paper production. The waste paper needs to be de-inked and it is standard practice to achieve this by forming a pulp from the waste paper in an aqueous medium that includes de-inking chemicals, and separating the ink from the pulp. This separation may be by, for instance, washing and/or flotation.

Typical chemical processes for de-inking are described in US-A-1,925,372, 2,525,594, 4,347,099 and 4,780,179, WO-A-90/10749 and FR-A-2,281,456. As is apparent from these publications, typical de-inking chemicals have comprised a complex mixture of chemicals. Generally they include a significant amount of alkaline material, with sodium silicate, hydroxide and carbonate frequently being proposed.

The literature shows that the pH of the resultant pulp during the de-inking process is usually high, for instance above 9 and most usually above 10. Exposing the cellulosic fibres to this degree of alkalinity tends to cause yellowing of the fibres and so it is generally necessary to add a peroxide as a bleaching agent.

It is also known to include various other additives. For instance in US-A-4,347,099 it is proposed to use a mixture of sodium hydroxide, hydrogen peroxide, a carboxylic polymer (usually polyacrylic acid or, preferably, poly hydroxy acrylic acid), dispersants such as anionic, cationic or non-ionic surface active agents, and other additives such as collectors, foaming agents, alkali silicates and pH regulators. The use of this complex and highly alkaline mixture is undesirable since the liquor that results from the de-inking process results in environmental disposal problems.

US-A-4,162,186 describes a deinking process which requires a combination of a water-soluble non-ionic surfactant and an oil-soluble non-ionic surfactant as the main deinking agent. The process may be carried out at a pH of 8.0 or below.

GB-A-2,178,079 describes the use of polymers of ethylenically unsaturated carboxylic monomers, for instance (meth) acrylic acid salt in a process of deinking wood free pulps formed from paper coated with colour pigments. The polymeric material is used to accelerate disintegration of the coating pigment.

A simpler composition is described in WO-A-90/10749 and has been commercialised under the trade name Ennesco D and apparently consists solely of a mixture of sodium carbonate and sodium phosphate, optionally with hydrogen peroxide. The use of this can reduce some environmental problems but it introduces others, since the presence of large amounts of dissolved phosphate in the de-inking liquor is environmentally undesirable.

It would therefore be desirable to be able to provide a de-inking process that could be operated under conditions that used a simple combination of chemicals that resulted in a waste liquor the disposal of which created less environmental problems than the disposal of the highly alkaline and/or phosphate-containing liquors that result from the known processes.

A process according to the invention of de-inking waste paper comprises forming a pulp from the waste paper in an aqueous pulping medium that has a pH of between 6 and 9 and separating the ink from the pulp and is characterised in that the aqueous pulping medium is free of dissolved phosphate and includes de-inking chemicals which are without surfactant and comprise an ink-dispersing amount of a dispersing agent which is selected from polymers of ethylenically unsaturated monomeric material comprising ethylenically unsaturated carboxylic acid salt, and optionally a buffer for maintaining a pH of between 6 and 9 in the aqueous pulping medium.

The pH of the aqueous medium during the de-inking process must be sufficiently high to assist release of the ink from the cellulosic fibres, and for this purpose it needs to be nearly neutral or slightly alkaline. Accordingly the pH must be at least 6, and often at least 6.5. For best results it is generally at least 7.0. The pH must not be too high as otherwise it will cause yellowing of the fibres and so must be below 9. Generally it is below 8.5 and frequently satisfactory results can be achieved at values up to about 8.

The desired pH may follow inevitably from the use of the chosen paper and dispersing agent. For instance if the paper is substantially neutral or slightly alkaline (when dispersed in water) the desired pH may be achieved merely by dispersing the paper in water in the presence of the desired polymeric dispersing agent, especially when that is introduced as an alkali salt. Often, however, it is desirable to make a deliberate addition of an alkali material and any environmentally acceptable, water soluble, alkali material can be used for this purpose, for instance sodium hydroxide or sodium silicate. Preferably the added alkali material has a buffering capacity so as to tend to hold the pH at a chosen value, and the preferred materials for this purpose are sodium bicarbonate and, especially, sodium carbonate.

The efficiency of the de-inking process, including the efficiency of the initial release of the ink from the fibres, can be significantly influenced by the pH that prevails during the process. Fluctuations in the pH can result in fluctations in the efficiency of de-inking. The waste paper that is used as the feed for de-inking processes can be of a wide variety of paper types, some of which may tend to be acidic while others tend to be alkaline. The incorporation of a buffer that will hold the pH of the stock at a preselected, substantially constant, pH despite variations in the nature of the paper therefore has the advantage of helping to maintain the de-inking performance at a uniform and satisfactory level.

Although the alkalinity is, for economy, generally introduced by the use of sodium salts or other compounds, it is also possible to use the equivalent potassium, ammonium or water soluble amine compounds.

The dispersing agent is preferably an anti-redeposition agent, for instance of the type used in laundry detergent compositions. Suitable anti-redeposition agents are water soluble polymers formed from ethylenically unsaturated monomeric material comprising ethylenically unsaturated carboxylic or sulphonic groups.

The polymeric dispersing agent serves as an effective dispersing agent for the ink without interfering with the subsequent procedures for separating the ink from the fibres and without interfering with the subsequent procedures for collecting the fibres into a paper sheet material. Its molecular weight (measured by gel permeation chromatography) should normally be above 1,000 and generally above 2,000. Generally it is below 100,000, for instance below 50,000. Best results are generally obtained when the molecular weight is in the range 2,000 to 20,000.

If it is desired to provide the de-inking chemicals in solid form, it is convenient for the molecular weight to be sufficiently high to facilitate the formulation of the product as a solid, in which event the molecular weight is generally above 5,000 and frequently in the range 7,000 to 20,000. However when the de-inking chemicals are formulated as a solution the molecular weight can be lower. Best results are often obtained in the range 2,000 to 10,000, often around 2,500 to 6,000.

The monomeric material from which the polymeric dispersing agent is formed comprises ethylenically unsaturated carboxylic acid. This can be methacrylic acid, maleic acid, crotonic acid, itaconic acid or any of the other polymerisable carboxylic acids, but preferably it is acrylic acid or a mixture of acrylic (or sometimes methacrylic) acid with maleic acid (frequently including anhydride). The acrylic acid or other carboxylic monomeric material can be polymerised alone or with sulphonic monomer such as 2-acrylamido methyl propane sulphonate (AMPS, U.S. trade mark), vinyl sulphonate or (meth) allyl sulphonate, and/or it can be copolymerised with non-ionic monomer, especially acrylamide. Generally the carboxylic monomer constitutes at least 50% by weight of the monomers and preferably the polymer is formed from carboxylic monomer alone or a blend consisting of carboxylic and sulphonic monomers. Suitable polymers include polyacrylic acid, copolymers of this with maleic anhydride, and copolymers of acrylic acid with 10-50% by weight AMPS.

The polymer preferably has polydispersity below 2, preferably below 1.8 and most preferably below 1.5, and generally above 1.1, for instance as described in EP-A-0129,329.

Particularly good results are obtained using mixtures of the polymer with another dispersing agent, in particular mixtures of one of the described polymeric dispersing agents, especially polyacrylic acid or a copolymer of acrylic acid with maleic acid (including anhydride) or AMPS, with a polyphosphonate or sequestering agent or CMC or methyl cellulose. The components in such mixtures typically are present in proportions ranging from 1:3 to 3:1 by weight.

Other suitable dispersing materials that can be used with the polymer in the invention, and which are frequently also suitable for use as anti-redeposition aids, include cellulosic derivatives, polyphosphonates, bentonites, and sequestering agents.

Suitable cellulosic derivatives include cellulose ethers, such as methyl cellulose, and carboxy methyl cellulose.

Suitable bentonites include the various swelling clays that are referred to colloquially as bentonites, including true bentonite, Fuller's Earth, hectorite and various swelling montmorillonites, such as activated calcium montmorillonite.

Suitable sequestering agents are amino carboxylic acid sequestering agents, such as ethylene diamine tetro acetic acid and nitrilo tri acetic acid.

When the separation is by flotation, a collector or other conventional flotation aid may be incorporated in conventional manner.

The invention also includes compositions suitable for incorporation in the pulp as described in claim 12, without surfactant and comprising the polymeric dispersing agent and other additives that are incorporated, and an alkaline material, preferably a buffering alkali such as sodium carbonate or sodium bicarbonate. Particularly preferred compositions are solid compositions in which the polymer has a molecular weight above 5,000 (often above 7,000), but below 20,000 or 50,000, and the alkali is sodium bicarbonate or, preferably, sodium carbonate. In general, the materials and molecular weights may be as described above.

The proportions of alkaline material and dispersing agent, on a dry weight basis, are generally 1:5 to 5:1 by weight, most preferably 2:1 to 1:2.

The amount of dispersing agent that is required for optimum performance can be selected by routine experimentation and is normally in the range 0.01 to 1% by weight based on the dry weight of the pulp, generally 0.05 to 0.5%.

The de-inking may be conducted in the presence of additional materials but a particular advantage of the invention is that the chemicals used for it can consist essentially only of the dispersing agent, buffering alkali, optional flotation aids and collectors. Peroxide can be included if desired, but an advantage of the invention is that it is usually unnecessary. Accordingly the liquor resulting from the de-inking is relatively free of materials that would create environmental problems during disposal.

The de-inking process can be carried out in broadly conventional manner, except for the choice of the de-inking chemicals, as described above. The de-inking chemicals can be included in the aqueous liquor into which the waste paper is initially pulped, or the waste paper can be pulped to form an aqueous pulp into which the de-inking chemicals are then incorporated.

The overall de-inking process generally comprises a series of stages, typically consisting of an initial maceration or pulping stage (preferably conducted under very high shear), a screening stage to remove grit and oversized particles, one or more washing or flotation stages, and a thickening stage to form a clean pulp that can either be used as such or that may be drained to form a dried pulp. Typical de-inking processes are described in more detail in, for instance, Handbook for Pulp and Paper Technologists by G.A.Smook.

To demonstrate the benefit of the invention, the following experiment was conducted. The experiment was designed for use in the laboratory to give a good indication of the results that may be obtained in practice in a washing de-inking plant comprising the steps of pulping, thickening, washing and re-washing, in that order.
1. Mixture of 70% newsprint and 30% magazine was pulped with the specified de-inking chemicals included, at 3½% consistency for 20 minutes in a standard laboratory pulp disintegrator at 45°C.
2. For the blank test a sample of an equivalent pulped stock was provided, but having had no de-inking chemicals added to it, and was formed into a pad for brightness measurement = PAD A.
3. 1000 mls of the pulped stock was thickened to 10% consistency (to a weight of 300g) over a 710 micrometer stainless steel sieve.
4. For all tests, a portion of this thickened stock was formed into a brightness pad for brightness measurement = PAD B.
5. 200g of the thickened pulp was diluted to 2000 mls using fresh water - consistency of 1%.
6. The diluted stock was thickened over a 710 micrometer stainless steel sieve to a weight of 200g.
7. Stages 5 and 6 were repeated using fresh water.
8. A portion of the final washed stock was formed into a brightness pad for brightness measurement = PAD C.

The brightness of pads A, B and C were determined using a Technibrite reflectance spectrophotometer set to measure at 457nm.

The brightness of pad A was 41.4.

When no de-inking chemicals were included, the brightness values on pads B and C were 43.1 and 43.9 respectively.

In the following all % values represent % by weight of dry chemicals based on the dry weight of the pulp.
(i) When 0.3% solid sodium polyacrylic acid of molecular weight in the range 2,500 to 10,000 was added as the de-inking chemical the brightness values were 45.8 and 49.6 respectively.
(ii) When 0.3% liquid sodium polyacrylic acid of molecular weight 2,500 to 6,000 was added the brightness values were 44.6 and 48.1 respectively.
(iii) [Reference Example] When the chemicals added at the de-inking stage consisted of 0.3% ethylene diamine tetracarboxylic acid (sodium salt) the values on pads B and C were 45.1 and 45.2 respectively.
(iv) When a mixture of 0.15% of this compound with 0.15% of a copolymer of acrylic acid and AMPS was used, similar values were obtained.

The results illustrate that an improvement in brightness can be achieved on both pads B and C by inclusion of the specified de-inking chemicals. However, it is acceptable to achieve an improvement on pad C only, and not pad B, since the presence of a greater amount of free water in pad C tends to be more conducive to ink removal.

## Claims

1. A process of de-inking waste paper, the process comprising forming a pulp from the waste paper in an aqueous medium that has a pH of between 6 and 9 and separating the ink from the pulp characterised in that the aqueous medium is free of dissolved phosphate and the process also includes incorporating into the aqueous medium deinking chemicals without surfactant, comprising an ink dispersing amount of a polymeric dispersing agent which is formed from ethylenically unsaturated monomeric material comprising ethylenically unsaturated carboxylic acid salt and optionally a buffer to maintain a pH of between 6 and 9 in the aqueous medium.

2. A process according to claim 1 wherein the dispersing agent has a molecular weight in the range 1,000 to 100,000,

3. A process according to claim 1 or claim 2 wherein the dispersing agent has a molecular weight in the range 2,000 to 20,000.

4. A process according to any preceding claim wherein the dispersing agent is an acrylic acid homopolymer or a copolymer of acrylic acid with maleic acid or 2-acrylamido methyl propane sulphonate.

5. A process according to any preceding claim wherein the dispersing agent is a homopolymer of acrylic acid and has a molecular weight in the range 2,500 to 10,000.

6. A process according to any preceding claim wherein the pH of the aqueous medium is in the range 6 to 8.5.

7. A process according to claim 6 wherein the pH of the aqueous medium is in the range 6.5 to 8.

8. A process according to any preceding claim wherein a buffer is added to the aqueous medium to maintain the pH at a chosen value.

9. A process according to claim 8 wherein the buffer comprises sodium bicarbonate or sodium carbonate.

10. A process according to claim 8 or claim 9 wherein the proportions of buffer and dispersing agent, on a dry weight basis, are in the range 1:5 to 5:1 by weight.

11. A process according to any preceding claim wherein the amount of polymeric dispersing agent is in the range 0.01 to 1% by weight based on the dry weight of the pulp.

12. A composition for de-inking waste paper and that is suitable for incorporation in pulp that is to be deinked, which is without surfactant and which comprises a polymeric dispersing agent formed from ethylenically unsaturated monomer comprising ethylenically unsaturated carboxylic acid salt, and an alkaline buffer to maintain the pulp that is being deinked at a pH of between 6 and 9, and wherein the composition is free of soluble phosphate.

13. A composition according to claim 12 wherein the alkaline buffer comprises sodium bicarbonate or sodium carbonate.

14. A composition according to claim 12 or claim 13 wherein the proportions of alkaline buffer and dispersing agent, on a dry weight basis, are in the range 1:5 to 5:1 by weight.

15. A composition according to any of claims 12 to 14 in which the polymeric dispersing agent has molecular weight in the range 2,000 to 20,000 and is an acrylic acid homopolymer or a copolymer of acrylic acid with maleic acid or 2-acrylamido methyl propane sulphonate.

16. A process according to any of claims 1 to 11 in which a composition according to any of claims 12 to 15 has been incorporated into the aqueous medium.

## Patentansprüche

1. Verfahren zur Enttintung von Papierabfall, wobei das Verfahren das Bilden eines Halbstoffes aus dem Papierabfall in einem wäßrigen Medium, welches einen pH zwischen 6 und 9 aufweist, und das Abtrennen der Druckfarbe aus dem Halbstoff umfaßt, dadurch gekennzeichnet, daß das wäßrige Medium frei von gelöstem Phosphat ist und das Verfahren auch den Einschluß von Enttintungs-Chemikalien ohne Tensid in das wäßrige Medium umfaßt, die eine Druckfarben-dispergierende Menge eines polymeren Dispergiermittels, welches aus ethylenisch ungesättigtes Carbonsäure-Salz umfassendem ethylenisch ungesättigtem Material gebildet ist, und gegebenenfalls einen Puffer umfassen, um den pH in dem wäßrigen Medium zwischen 6 und 9 zu halten.

2. Verfahren nach Anspruch 1, worin das Dispergiermittel ein Molekulargewicht im Bereich von 1000 bis 100000 besitzt.

3. Verfahren nach Anspruch 1 oder Anspruch 2, worin das Dispergiermittel ein Molekulargewicht im Bereich von 2000 bis 20000 besitzt.

4. Verfahren nach irgendeinem vorhergehenden Anspruch, worin das Dispergiermittel ein Acrylsäure-Homopolymer oder ein Copolymer von Acrylsäure mit Maleinsäure oder 2-Acrylamidomethylpropansulfonat ist.

5. Verfahren nach irgendeinem vorhergehenden Anspruch, worin das Dispergiermittel ein Homopolymer von Acrylsäure ist und ein Molekulargewicht im Bereich von 2500 bis 10000 besitzt.

6. Verfahren nach irgendeinem vorhergehenden Anspruch, worin der pH des wäßrigen Mediums im Bereich von 6 bis 8,5 liegt.

7. Verfahren nach Anspruch 6, worin der pH des wäßrigen Mediums im Bereich von 6,5 bis 8 liegt.

8. Verfahren nach irgendeinem vorhergehenden Anspruch, worin dem wäßrigen Medium ein Puffer zugegeben wird, um den pH bei einem gewählten Wert zu halten.

9. Verfahren nach Anspruch 8, worin der Puffer Natriumbicarbonat oder Natriumcarbonat umfaßt.

10. Verfahren nach Anspruch 8 oder Anspruch 9, worin die Anteile an Puffer und Dispergiermittel auf Trockengewichtsbasis bezogen auf das Gewicht im Bereich von 1:5 bis 5:1 liegen.

11. Verfahren nach irgendeinem vorhergehenden Anspruch, worin die Menge an polymerem Dispergiermittel im Bereich von 0,01 bis 1 Gew.-% bezogen auf das Trockengewicht des Halbstoffes liegt.

12. Zusammensetzung zur Enttintung von Papierabfall, welche zum Einschluß in einen Halbstoff, der enttintet werden soll, geeignet ist, welche ohne Tensid ist und ein aus ethylenisch ungesättiges Carbonsäure-Salz umfassendem ethylenisch ungesättigtem Monomer gebildetes polymeres Dispergiermittel und einen alkalischen Puffer umfaßt, um den Halbstoff, der enttintet wird, bei einem pH zwischen 6 und 9 zu halten, und worin die Zusammensetzung frei von löslichem Phosphat ist.

13. Zusammensetzung nach Anspruch 12, worin der alkalische Puffer Natriumbicarbonat oder Natriumcarbonat umfaßt.

14. Zusammensetzung nach Anspruch 12 oder Anspruch 13, worin die Anteile an alkalischem Puffer und Dispergiermittel auf Trockengewichtsbasis bezogen auf das Gewicht im Bereich von 1:5 bis 5:1 liegen.

15. Zusammensetzung nach irgendeinem der Ansprüche 12 bis 14, worin das polymere Dispergiermittel ein Molekulargewicht im Bereich von 2000 bis 20000 besitzt und ein Acrylsäure-Homopolymer oder ein Copolymer von Acrylsäure mit Maleinsäure oder 2-Acrylamidomethylpropansulfonat ist.

16. Verfahren nach irgendeinem der Ansprüche 1 bis 11, worin eine Zusammensetzung nach irgendeinem der Ansprüche 12 bis 15 in das wäßrige Medium eingeschlossen wurde.

## Revendications

1. Procédé de désencrage de vieux papiers, le procédé comprenant la formation d'une pâte à papier à partir des vieux papiers dans un milieu aqueux qui présente un pH compris entre 6 et 9 et la séparation de l'encre de la pâte à papier, caractérisé en ce que le milieu aqueux est exempt de phosphate dissous et le procédé comprend également l'incorporation dans le milieu aqueux de produits chimiques de désencrage sans tensioactif, comprenant une quantité dispersant l'encre d'un agent dispersant polymère qui est formé à partir d'une matière monomère éthyléniquement insaturée comprenant un sel d'acide carboxylique éthyléniquement insaturé et facultativement un tampon pour maintenir un pH entre 6 et 9 dans le milieu aqueux.

2. Procédé selon la revendication 1, dans lequel l'agent dispersant a un poids moléculaire dans l'intervalle de 1 000 à 100 000.

3. Procédé selon la revendication 1 ou la revendication 2, dans lequel l'agent dispersant a un poids moléculaire dans l'intervalle de 2 000 à 20 000.

4. Procédé selon l'une quelconque des revendications précédentes, dans lequel l'agent dispersant est un homopolymère d'acide acrylique ou un copolymère d'acide acrylique avec de l'acide maléique ou du sulfonate de 2-acrylamidométhylpropane.

5. Procédé selon l'une quelconque des revendications précédentes, dans lequel l'agent dispersant est un homopolymère d'acide acrylique et a un poids moléculaire dans l'intervalle de 2 500 à 10 000.

6. Procédé selon l'une quelconque des revendications précédentes, dans lequel le pH du milieu aqueux est dans l'intervalle de 6 à 8,5.

7. Procédé selon la revendication 6, dans lequel le pH du milieu aqueux est dans l'intervalle de 6,5 à 8.

8. Procédé selon l'une quelconque des revendications précédentes, dans lequel un tampon est ajouté au milieu aqueux pour maintenir le pH à une valeur choisie.

9. Procédé selon la revendication 8, dans lequel le tampon comprend du bicarbonate de sodium ou du carbonate de sodium.

10. Procédé selon la revendication 8 ou la revendication 9, dans lequel les proportions du tampon et de l'agent dispersant, rapportées à un poids sec, sont dans l'intervalle de 1 : 5 à 5 : 1 en poids.

11. Procédé selon l'une quelconque des revendications précédentes, dans lequel la quantité d'agent dispersant polymère est dans l'intervalle de 0,01 à 1% en poids, rapportés au poids sec de la pâte à papier.

12. Composition de désencrage de vieux papiers et qui est appropriée pour l'incorporation dans la pâte à papier qui doit être désencrée, qui est sans tensioactif et qui comprend un agent dispersant polymère formé à partir d'un monomère éthyléniquement insaturé comprenant un sel d'acide carboxylique éthyléniquement insaturé et un tampon alcalin pour maintenir la pâte à papier qui est désencrée à un pH compris entre 6 et 9, et dans laquelle la composition est exempte de phosphate soluble.

13. Composition selon la revendication 12, dans laquelle le tampon alcalin comprend du bicarbonate de sodium ou du carbonate de sodium.

14. Composition selon la revendication 12 ou la revendication 13, dans laquelle les proportions de tampon alcalin et d'agent dispersant, rapportées à un poids sec, sont dans l'intervalle de 1 : 5 à 5 : 1 en poids.

15. Composition selon l'une quelconque des revendications 12 à 14 dans laquelle l'agent dispersant polymère a un poids moléculaire dans l'intervalle de 2 000 à 20 000 et est un homopolymère d'acide acrylique ou un copolymère d'acide acrylique avec de l'acide maléïque ou du sulfonate de 2-acrylamidométhylpropane.

16. Procédé selon l'une quelconque des revendications 1 à 11 dans lequel une composition selon l'une quelconque des revendications 12 à 15 a été incorporée dans le milieu aqueux.
